# EUROPEAN PATENT APPLICATION

(11) **EP 4 488 667 A1**
(43) Date of publication of application: **08.01.2025**
(21) Application number: 23763753.3
(22) Date of filing: 03.03.2023
(51) Int. Cl.: G01N 23/04, G01N 23/083, G01N 23/18, H01M 10/04, H01M 10/058

(54) **X-RAY INSPECTION DEVICE AND X-RAY INSPECTION METHOD**

(30) Priority: 03.03.2022 KR 20220027741
(71) Applicant: SK On Co., Ltd., Seoul 03161 (KR)
(72) Inventor: KIM, Hyung Joon, Daejeon 34124 (KR); SHIN, Dong Whan, Daejeon 34124 (KR)
(74) Representative: Stolmár & Partner Patentanwälte PartG mbB
(86) International application number: PCT/KR2023/002964
(87) International publication number: WO 2023/167555

(57) **Abstract**

An X-ray inspection device of the present disclosure includes an X-ray output portion irradiating X-rays to a battery including a plurality of electrode layers and a separator interposed between the plurality of electrode layers; an X-ray detection portion acquiring a plurality of gray values based on intensity of the X-rays that have transmitted through the battery among the X-rays; a signal processing portion acquiring an X-ray image including the plurality of gray values; and an inspection portion determining whether the battery is defective based on a comparison result of gray values included in a selected area of the X-ray image and a reference value corresponding to the selected area.

## Description

### [Technical Field]

The present disclosure relates to an X-ray inspection device and an X-ray inspection method, and more specifically, to an X-ray inspection device and an X-ray inspection method detecting battery defects using X-ray.

### [Background Art]

Recently, demand for mobile devices such as smartphones, tablet PCs, and wireless earphones is increasing. In addition, as the development of electric vehicles, batteries for energy storage, robots, and satellites is carried out in a full scale, research is being actively conducted on high-performance secondary batteries that can be repeatedly charged and discharged, as an energy source.

A battery may include electrodes and a separator. A separator may be disposed between electrodes. Electrodes may include at least one cathode and at least one anode.

In a battery manufacturing process, defects may be generated in which foreign substances such as electrode pieces and metal parts enter into or remain inside a battery. Metal foreign substances may grow into dendrites and cause a short-circuit of a battery, which may cause problems such as battery failure, damage, or ignition. In a battery manufacturing process, defects may be generated such as folding of electrodes or stacking of fewer or more electrodes than the designed number. To ensure battery stability and improve durability, a technology to quickly and accurately detect battery defects is required.

### [Disclosure]

### [Technical Problem]

The present disclosure is intended to provide an X-ray inspection device and X-ray inspection that can quickly and accurately detect battery defects.

### [Technical Solution]

An X-ray inspection device according to one embodiment of the present disclosure may include: an X-ray output portion irradiating X-rays to a battery including a plurality of electrode layers and a separator interposed between the plurality of electrode layers; an X-ray detection portion acquiring a plurality of gray values based on intensity of the X-rays that have transmitted through the battery among the X-rays; a signal processing portion acquiring an X-ray image including the plurality of gray values; and an inspection portion determining whether the battery is defective based on a comparison result of gray values included in a selected area of the X-ray image and a reference value corresponding to the selected area.

An X-ray inspection method according to one embodiment of the present disclosure may include: a step of irradiating X-rays to a battery; a step of acquiring a plurality of gray values based on transmitted X-rays from the battery; a step of acquiring an X-ray image including the plurality of gray values; and a step of determining whether the battery is defective by comparing each of the gray values included in the selected area of the X-ray image with a reference value corresponding to the selected area.

An X-ray inspection method according to one embodiment of the present disclosure may include: a step of irradiating X-rays to a battery; a step of acquiring a plurality of gray values based on transmitted X-rays from the battery; a step of acquiring an X-ray image including the plurality of gray values; and a step of determining whether the battery is defective by comparing an average value of the gray values included in the selected area of the X-ray image with a reference value corresponding to the selected area.

### [Advantageous Effects]

According to the present disclosure, an X-ray inspection device and an X-ray inspection that can quickly and accurately detect battery defects.

According to the present disclosure, various defects such as foreign substances contained in a battery, folded electrodes, and mismatch in the number of electrodes can be quickly and accurately detected without destructing the battery.

### [Description of Drawings]

FIG. 1 shows a diagram for explaining an X-ray inspection device according to one embodiment of the present disclosure.
FIG. 2A shows a cross-sectional diagram of a battery according to one embodiment of the present disclosure.
FIG. 2B shows a floor plan of a battery according to one embodiment of the present disclosure.
FIG. 3 shows a diagram for explaining an X-ray detection portion according to one embodiment of the present disclosure.
FIGS. 4A to 4C show diagrams for explaining sensing operation of a line scanner according to one embodiment of the present disclosure.
FIGS. 5A to 5C show diagrams for explaining an X-ray detection portion according to another embodiment of the present disclosure.
FIG. 6 shows a diagram for explaining an X-ray image according to one embodiment of the present disclosure.
FIG. 7 shows a diagram for explaining a reference value according to one embodiment of the present disclosure.
FIGS. 8A to 8C show diagrams for explaining a method of calculating a reference value according to one embodiment of the present disclosure.
FIG. 9 shows a diagram for explaining a method of calculating a reference value according to another embodiment of the present disclosure.
FIG. 10 shows a diagram for explaining a battery defect according to one embodiment of the present disclosure.
FIG. 11 shows a diagram for explaining a battery defect according to another embodiment of the present disclosure.
FIG. 12 shows a diagram for explaining an X-ray inspection method according to one embodiment of the present disclosure.
FIG. 13 shows a diagram for explaining an X-ray inspection method according to one embodiment of the present disclosure.

### [Modes of the Invention]

The structural or functional descriptions of embodiments disclosed in the present specification or application are merely illustrated for the purpose of explaining embodiments according to the technical principle of the present invention, and embodiments according to the technical principle of the present invention may be implemented in various forms in addition to the embodiments disclosed in the specification of application. In addition, the technical principle of the present invention is not construed as being limited to the embodiments described in the present specification or application.

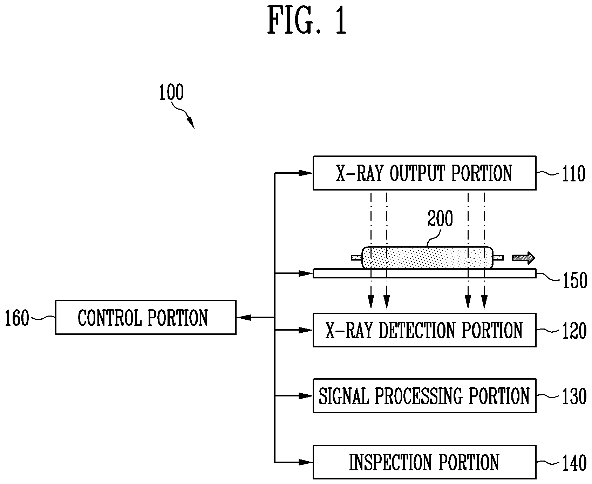

FIG. 1 shows a diagram for explaining an X-ray inspection device according to one embodiment of the present disclosure.

Referring to FIG. 1, an X-ray inspection device 100 according to one embodiment of the present disclosure may include an X-ray output portion 110, an X-ray detection portion 120, a signal processing portion 130, and an inspection portion 140.

An X-ray output portion 110 may generate X-rays. X-rays may be electromagnetic waves that have the property of transmitting an object. For example, X-rays may be electromagnetic waves with a wavelength of 0.01 to 10 nanometers.

An X-ray output portion 110 may radiate X-rays to a battery 200. A battery 200 may be a secondary battery that may be reused through charging even after being discharged. For example, a battery 200 may be a lithium ion battery. A battery 200 may include a plurality of electrode layers and a separator interposed between the plurality of electrode layers. A plurality of electrode layers may include at least one anode layer and at least one cathode layer.

An X-ray output portion 110 may irradiate X-rays in a specific direction. For example, a specific direction may be a direction in which a plurality of electrode layers are stacked. For example, a specific direction may be a direction perpendicular to a plurality of electrode layers. For example, a specific direction may be a direction that passes through all of a plurality of electrode layers. To this end, an X-ray output portion 110 may be positioned above or below a battery 200.

In one embodiment, an X-ray output portion 110 may include an X-ray tube, a voltage generator, and a current source.

An X-ray tube may include an anode, a cathode, and a vacuum tube. An anode and a cathode may be disposed within a vacuum tube. For example, an anode and a cathode may each be implemented as a metal such as tungsten (W), molybdenum (Mo), chromium (Cr), rhenium (Re), copper (Cu), cobalt (Co), iron (Fe), tantalum (Ta), and zirconium (Zr) and nickel (Ni) or alloys thereof. An X-ray tube may be of either a closed type, which has a structure in which the inside of a vacuum tube is sealed in a vacuum state, or an open type, which has a structure that maintains a vacuum state inside a vacuum tube when a separate vacuum pump operates. When an X-ray output portion is an open type, the X-ray output portion 110 may further include a vacuum pump. A vacuum pump may create a vacuum inside a vacuum tube.

A current source may generate thermal electrons at an anode by applying a current to heat a filament of the anode. A voltage generator may accelerate thermal electrons by applying a high voltage between an anode and a cathode. For example, a high voltage may be a voltage in a kV unit. In this case, the accelerated thermal electrons may collide with a cathode to generate X-rays. The generated X-rays may be irradiated to a subject.

An X-ray detection portion 120 may detect X-rays that have transmitted through a battery 200. To this end, an X-ray detection portion 120 may be positioned in the direction of travel of the X-rays that have transmitted through a battery 200. An X-ray detection portion 120 may acquire a gray value based on intensity of the X-rays that transmitted through a battery 200. For example, an X-ray detection portion 120 may receive X-rays that have transmitted through a battery 200. An X-ray detection portion 120 may acquire a gray value based on the intensity of the received X-rays.

An X-ray detection portion 120 may include a plurality of pixels. Each of the plurality of pixels may receive X-rays that have transmitted through a corresponding unit area among unit areas of a battery 200. When X-rays are received, each pixel may convert the X-rays to acquire a sensing signal.

In one embodiment, an X-ray detection portion 120 may acquire a gray value using a time delay integration (TDI) method. In this case, an X-ray detection portion 120 may include a plurality of line scanners. A line scanner may include a plurality of pixels arranged in a row or column direction. In this case, sensing signals acquired by passing X-rays multiple times in one direction through a unit area of a battery 200 may be accumulated. The accumulated sensing signals may be treated as one sensing signal for a unit area. In other words, a clearer image may be acquired by overlapping sensing signals acquired as many as the number of line scanners to create one image. In another embodiment, an X-ray detection portion 120 may acquire a gray value using a flat panel detection (FPD) method. In this case, an X-ray detection portion 120 may include a plurality of pixels arranged in row and column directions.

A signal processing portion 130 may acquire an X-ray image. An X-ray image may include a plurality of gray values. Each of the plurality of gray values may be arranged along row and column directions within the X-ray image. Specifically, a signal processing portion 130 may receive gray values from an X-ray detection portion 120 and acquire an X-ray image including the received gray values. For example, when gray values in line units (or area units) are received from an X-ray detection portion 120, a signal processing portion 130 may arrange currently received gray values in another line (or area) so that the gray values that have already been received may not overlap with their arranged line (or area). A signal processing portion 130 may generate an X-ray image including gray values arranged in each line (or area). Here, a line may represent one row or one column. An area may include a plurality of lines.

In one embodiment, a signal processing portion 130 may acquire a plurality of X-ray images and merge the acquired X-ray images to acquire a final X-ray image. A final X-ray image acquired by merging a plurality of X-ray images may have clearer contrast in gray values.

In one embodiment, a plurality of X-ray images acquired by a signal processing portion 130 may be acquired from X-rays of different outputs irradiated from an X-ray output portion 110. For example, the output of irradiated X-rays may be adjusted by adjusting the voltage and/or current of an X-ray output portion 110. Since the transmittance of X-rays of different outputs may be different, when X-rays of different outputs are irradiated to a battery 200, images at different depths of the battery 200 may be acquired.

In one embodiment, a signal processing portion 130 may perform preprocessing of an X-ray image. For example, a signal processing portion 130 may convert an X-ray image into a binary image. Specifically, a signal processing portion 130 may compare each of the gray values included in an X-ray image with a reference value and convert each of the gray values into pixel values having one of a first value and a second value. Gray values may be compared to different reference values depending on the area containing the gray values. When a gray value is greater than a corresponding reference value, the gray value may be converted to a first value, and when a gray value is smaller than or equal to a corresponding reference value, the gray value may be converted to a second value. A signal processing portion 130 may acquire a binarized image including pixel values. Accordingly, the detection ability to detect defects such as foreign substances may be improved.

An inspection portion 140 may detect defects in a battery 200. A defect may include at least one of a foreign substance defect, an electrode folding defect, an electrode tearing defect, and an electrode layer number defect. A foreign substance defect refers to foreign substances such as electrode pieces and metal parts entering or remaining inside a battery 200. An electrode folding defect refers to the presence of at least one electrode layer in a folded state inside a battery 200. An electrode layer number defect means that the number of electrode layers included in a completely manufactured battery 200 does not match the designed number. An electrode tearing defect refers to a part of an electrode being torn or removed. An area where an electrode tearing defect has occurred may be seen as the number of electrode layers being locally smaller than the designed number. A torn electrode part may enter into another battery 200 as a foreign substance.

An inspection portion 140 may determine whether a battery 200 is defective based on a comparison result between gray values included in a selected area of an X-ray image and a reference value corresponding to the selected area.

In an embodiment, an inspection portion 140 may determine an area of interest in an X-ray image. For example, an area of interest may be an area corresponding to a battery 200 in an X-ray image.

In one embodiment, an inspection portion 140 may determine an area of interest based on a preset pattern included in an X-ray image. For example, an area of interest may be set based on a pattern corresponding to an external outline of a battery 200.

In another embodiment, an inspection portion 140 may determine an area of interest based on a change in a gray value in a preset direction within an X-ray image. For example, straight lines may be drawn in each of the directions from top to bottom, bottom to top, left to right, and right to left on a two-dimensional X-ray image, and an area of interest may be set by finding points where a gray value changes drastically in each direction.

In an embodiment, an inspection portion 140 may set a selected area within an area of interest.

In one embodiment, a corresponding reference value may be set for each area of a battery 200. In another embodiment, a reference value corresponding to an entire area of a battery 200 may be set.

In one embodiment, a reference value may be a predetermined value. In one embodiment, a reference value may be a value determined using gray values of an X-ray image. In other words, an independent reference value may be applied to each X-ray image.

In one embodiment, an inspection portion 140 may sequentially select areas in an X-ray image. For example, when a selected area is a first area, an inspection portion 140 may compare each of the gray values included in the selected area with a first reference value corresponding to the first area. When a selected area is a second area, an inspection portion 140 may compare each of the gray values included in the selected area with a second reference value corresponding to the second area. When a selected area is a third area, an inspection portion 140 may compare each of the gray values included in the selected area with a third reference value corresponding to the third area.

In one embodiment, an inspection portion 140 may select gray values that are greater than a corresponding reference value among the gray values included in a selected area. An inspection portion 140 may extract gray values adjacent to each other as one object, among the selected gray values. An inspection portion 140 may determine whether a battery 200 is defective based on the size and shape of an object.

In one embodiment, when the size of an object is larger than a reference size, an inspection portion 140 may determine that a battery 200 is defective. For example, a reference size may be preset to 2x2, 2x1, 1x2, or the lie. In one embodiment, when the size of an object is smaller than or equal to a reference size, an inspection portion 140 may determine the object to be noise. In this case, the inspection portion 140 may not determine that the battery 200 is defective.

In one embodiment, when the shape of an object is a reference shape, an inspection portion 140 may determine that a battery 200 is defective. A reference shape may include at least one selected from a triangular shape, a rectangular shape, a circular shape, a ring shape, and an irregular shape.

In one embodiment, an inspection portion 140 may determine that a battery 200 is defective when an average value of gray values included in a selected area is greater than a reference value corresponding to the selected area. In an embodiment, an inspection portion 140 may determine that a battery 200 is defective when an average value of gray values included in a selected area is greater than an upper error limit of a reference value corresponding to the selected area. This indicates an electrode number defect in which more electrode layers are stacked than the designed number. An upper error limit may be a preset value.

In one embodiment, an inspection portion 140 may determine that a battery 200 is defective when an average value of gray values included in a selected area is smaller than a reference value corresponding to the selected area. In an embodiment, an inspection portion 140 may determine that a battery 200 is defective when an average value of gray values included in a selected area is greater than a lower error limit of a reference value corresponding to the selected area. This indicates an electrode number defect in which fewer electrode layers are stacked than the designed number. A lower error limit may be a preset value.

In one embodiment, a reference value may be a value determined using gray values of an X-ray image. In other words, an independent reference value may be applied to each X-ray image.

Specifically, an inspection portion 140 may determine an average value of gray values included in a preset area of an X-ray image as a reference value. In one embodiment, a preset area may be a selected area. In another embodiment, a preset area may be an entire area corresponding to a battery 200. An inspection portion 140 may select gray values that are greater than the corresponding reference value among the gray values included in a selected area. An inspection portion 140 may extract gray values adjacent to each other as one object, among the selected gray values. An inspection portion 140 may determine whether a battery 200 is defective based on the size and shape of an object. In this way, a defect in a battery 200 may be detected using a reference value optimized for each battery. An X-ray inspection device 100 according to one embodiment may further include at least one of a transfer portion 150 and a control portion 160.

In another embodiment, a reference value may be a preset value. For example, a reference value may be a gray value corresponding to a normal battery. In one embodiment, a gray value corresponding to a normal battery may be a value acquired by measuring a normal battery in advance. In another embodiment, a gray value corresponding to a normal battery may be a value acquired by measuring each of gray values corresponding to some components included in a normal battery and then summing the measured gray values. Here, some components included in a normal battery may include at least one cathode layer, at least one anode layer, at least one separator, and at least one exterior material layer. For example, a gray value corresponding to a normal battery may be acquired by summing gray values corresponding to two or more selected from the group consisting of at least one cathode layer, at least one anode layer, at least one separator, and at least one exterior material layer included in a normal battery.

A transfer portion 150 may move a battery 200 in a specific direction. For example, a specific direction may be a horizontal direction. For example, a specific direction may be a direction perpendicular to a direction in which X-rays are irradiated. In one embodiment, a transfer portion 150 may include a conveyor and a transfer motor. A transfer motor may transmit a rotational force to a conveyor. When a rotational force is transmitted to a conveyor, a battery 200 positioned at a specific point on the conveyor may be moved to another point.

A control portion 160 may control overall operation of an X-ray inspection device 100. In one embodiment, a control portion 160 may control operation of at least one of an X-ray output portion 110, an X-ray detection portion 120, a signal processing portion 130, an inspection portion 140, and a transfer portion 150. In one embodiment, a control portion 160 may perform data communication operation or data calculation processing operation. For example, a control portion 160 may include a single processor or a plurality of processors.

In one embodiment, an X-ray inspection device 100 may include an X-ray output portion 110, an X-ray detection portion 120, a signal processing portion 130, an inspection portion 140, and a control portion 160. Here, the X-ray inspection device 100 may be a single inspection device, but this is only an example, and it may be implemented as a combination of a plurality of electronic devices. For example, a first electronic device may include an X-ray output portion 110, an X-ray detection portion 120, and a control portion 160, and the second electronic device may include a signal processing portion 130 and an inspection portion 140. A first electronic device and a second electronic device may transmit and receive data according to various communication standards. In this case, the first electronic device is in the form of an X-ray inspection facility, and the second electronic device may be implemented in various forms such as a computer, a laptop computer, a tablet computer, a smartphone, or a mobile device. As such, an X-ray inspection device 100 may be implemented as a combination of various electronic devices.

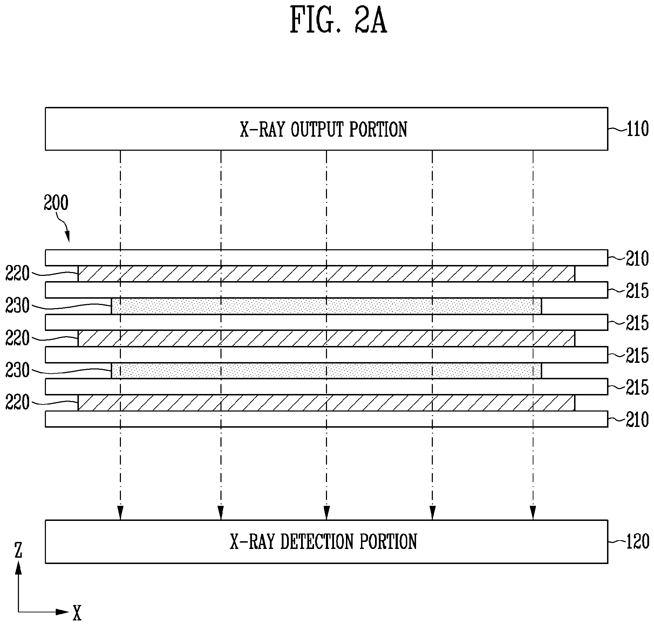

FIG. 2A shows a cross-sectional diagram of a battery according to one embodiment of the present disclosure.

Referring to FIG. 2A, a battery 200 according to one embodiment may include a plurality of electrode layers 220 and 230 and a separator 215. A plurality of electrode layers 220 and 230 may include at least one anode layer 220 and at least one cathode layer 230. A battery 200 may further include an exterior material layer 210. An exterior material layer 210 may seal the interior of a battery 200 and protect the interior of the battery 200 from the external environment.

In one embodiment, the type of battery 200 may be one of various types such as a pouch type, a prismatic type, and a can type. A pouch type refers to a form in which electrode layers 220 and 230 and separator 215 stacked in a battery 200 are surrounded with a pouch made of a material such as a film. For example, an exterior material layer 210 may include a pouch. A prismatic type refers to a form in which a battery 200 is packaged like a rectangular parallelepiped or cube. For example, an exterior material layer 210 may be implemented in the form of a rectangular parallelepiped or cube made of a metal material such as aluminum. A can type refers to a form in which the battery 200 is packaged like a cylinder. For example, an exterior material layer 210 may be implemented as a cylinder made of a metal material such as aluminum.

A battery 200 may be formed in a layer structure in which a plurality of electrode layers 220 and 230 and a separator 215 are stacked. An anode layer 220 and a cathode layer 230 may be alternately stacked along the Z-axis direction, and in this case, a separator 215 may be positioned between the anode layer 220 and the cathode layer 230. An exterior material layer 210 is positioned on an outermost side of an anode layer 220, and the interior of a battery 200 may be sealed through the exterior material layer 210.

An anode layer 220 may include an anode current collector and an anode active material. An anode active material may be a material which lithium ions may be inserted to or extracted from. For example, an anode active material may be any one of carbon-based materials such as crystalline carbon, amorphous carbon, carbon composite, and carbon fiber, lithium alloy, silicon (Si), and tin (Sn). Depending on the embodiment, an anode active material may be natural graphite or artificial graphite, but is not limited to a specific example. An anode current collector may include, for example, any one of stainless steel, nickel (Ni), aluminum (Al), titanium (Ti), copper (Cu), and alloys thereof, and may be provided in various forms such as film, sheet, and foil.

A cathode layer 230 may include a cathode current collector and a cathode active material. A cathode active material may include a material a material which lithium (Li) ions may be inserted to or extracted from. A cathode active material may be a lithium metal oxide. For example, a cathode active material may be one of a lithium manganese-based oxide, a lithium nickel-based oxide, a lithium cobalt-based oxide, a lithium nickel manganese-based oxide, a lithium nickel cobalt manganese-based oxide, a lithium nickel cobalt aluminum-based oxide, a lithium iron phosphate-based compound, a lithium manganese phosphate-based compound, a lithium cobalt phosphate-based compound, and a lithium vanadium phosphate-based compound, but is not necessarily limited to a specific example. A cathode current collector may include, for example, any one of stainless steel, nickel (Ni), aluminum (Al), titanium (Ti), copper (Cu), and alloys thereof, and may be provided in various forms such as film, sheet, and foil.

In one embodiment, each of an anode layer 220 and a cathode layer 230 may further include a binder and a conductive material. A binder mediates bonding between a current collector and an active material layer, thereby improving mechanical stability. A conductive materials may improve electrical conductivity. A conductive material may include a metal-based material.

A separator 215 may prevent electrical contact between an anode layer 220 and a cathode layer 230. A separator 215 may have holes formed therein to allow ions such as lithium ions to pass through.

In one embodiment, a separator 215 may include a porous polymer film or a porous non-woven fabric. Here, a porous polymer film may be formed as a single layer or a multiple layer including a polyolefin-based polymer such as an ethylene polymer, a propylene polymer, an ethylene/butene copolymer, an ethylene/hexene copolymer, and an ethylene/methacrylate copolymer. A porous nonwoven fabric may include at least one of high-melting point glass fibers, polyethylene terephthalate fibers, and a highly heat-resistant separator including ceramic (ceramic coated separator; CCS).

In one embodiment, a battery 200 may further include an electrolyte. An electrolyte may refer to a material functioning as a mediator that helps the migration of ions such as lithium ions.

Meanwhile, the number of each of an anode layer 220, a cathode layer 230, and a separator 215 may be modified in various ways.

In one embodiment, an X-ray output portion 110 may radiate X-rays in a direction in which a plurality of electrode layers 220 and 230 are stacked. For example, a direction in which the plurality of electrode layers 220 and 230 are stacked may be the Z-axis direction.

Specifically, an X-ray output portion 110 and an X-ray detection portion 120 may be positioned to face each other, and a battery 200 may be positioned between an X-ray output portion 110 and an X-ray detection portion 120. Here, the battery 200 may include a plurality of electrode layers 220 and 230 stacked in the Z-axis direction. In this case, the X-ray output portion 110 may irradiate X-rays in the Z-axis direction within an error range.

For example, an X-ray output portion 110 may be position at the top of a battery 200, and an X-ray detection portion 120 may be position at the bottom of the battery 200. As another example, an X-ray output portion 110 may be position at the bottom of a battery 200, and an X-ray detection portion 120 may be position at the top of the battery 200. Each of an X-ray output portion 110 and an X-ray detection portion 120 may be positioned to contact or not contact a battery 200.

In addition, an X-ray detection portion 120 may receive X-rays that have transmitted through a battery 200. An X-ray detection portion 120 may acquire a gray value based on the intensity of X-rays that have transmitted through a battery 200.

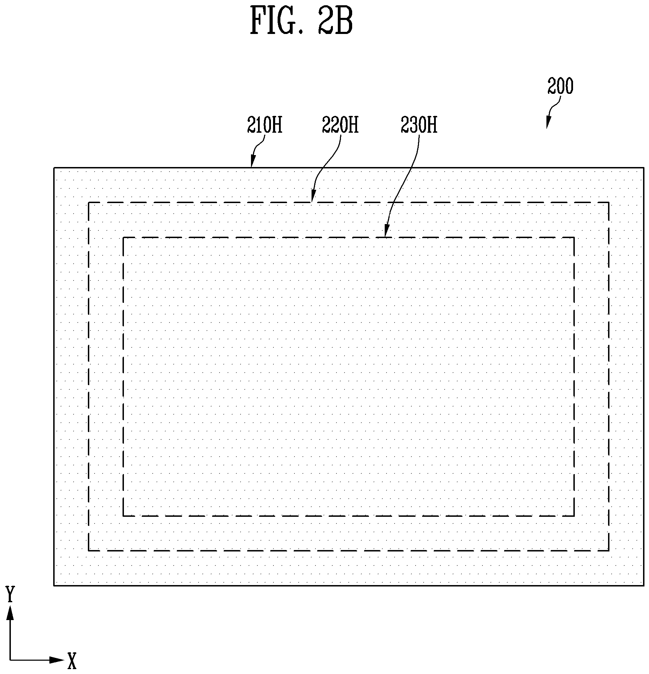

FIG. 2B shows a floor plan of a battery according to one embodiment of the present disclosure.

Referring to FIG. 2B, a battery 200 according to one embodiment may include a plurality of areas 210H to 230H. A plurality of areas 210H to 230H may be areas on the XY-plane perpendicular to the Z-axis. A plurality of areas 210H to 230H may include a first battery area 210H, a second battery area 220H, and a third battery area 230H.

A first battery area 210H may be an area where a separator 215 is stacked, excluding a second battery area 220H and a third battery area 230H. For example, a first battery area 210H may be an area between a boundary of a separator 215 and a boundary of an anode layer 220 on the XY-plane.

A second battery area 220H may be an area where an anode layer 220 and a separator 215 are stacked together, excluding a third battery area 230H. For example, a second battery area 220H may be an area between a boundary of an anode layer 220 and a boundary of a cathode layer 230 on the XY-plane.

A third battery area 230H may be an area where a cathode layer 230, an anode layer 220, and a separator 215 are stacked together. For example, a third battery area 230H may be an area inside a boundary of a cathode layer 230 on the XY-plane.

In one embodiment, the size of an anode layer 220 may be larger than the size of a cathode layer 230. In one embodiment, the size of a separator 215 may be larger than the size of an anode layer 220. For example, the size may represent the length in the X-axis direction and the length in the Y-axis direction. As another example, the size may be the area on the XY-plane.

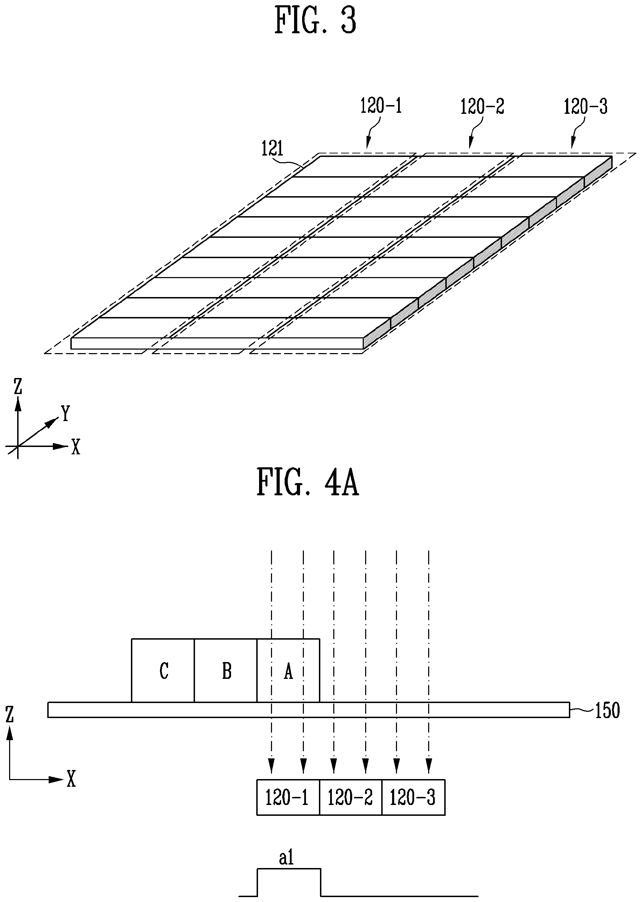

In one embodiment, an X-ray detection portion 120 may use the TDI method. For example, a battery 200 may be moved in the X-axis direction while the positions of an X-ray output portion 110 and an X-ray detection portion 120 are fixed. In this case, while the battery 200 is moving, the X-ray output portion 110 may irradiate X-rays to the battery 200, and the X-ray detection portion 120 may detect X-rays that have transmitted through the battery 200. As another example, while the position of a battery 200 is fixed, an X-ray output portion 110 and an X-ray detection portion 120 may be moved in the X-axis direction. In this case, while the X-ray output portion 110 and the X-ray detection portion 120 are being moved, the X-ray output portion 110 may irradiate X-rays to the battery 200, and the X-ray detection portion 120 may detect X-rays that have transmitted through the battery 200. Specific details will be described with reference to FIGS. 3, 4A to 4C, and 5A to 5C.

FIG. 3 shows a diagram for explaining an X-ray detection portion according to one embodiment of the present disclosure.

Referring to FIG. 3, an X-ray detection portion 120 may include a plurality of line scanners 120-1 to 120-3.

Each of the plurality of line scanners 120-1 to 120-3 may include a plurality of pixels. For example, each line scanner 120-1 to 120-3 may include a plurality of pixels arranged in the form of a line along the Y-axis direction. For example, each line scanner 120-1 to 120-3 may include pixels arranged in 1 x n. Here n is a natural number.

A pixel 121 may detect transmitted X-rays that have transmitted through a unit area of a battery 200 and acquire a sensing signal for the transmitted X-rays. For example, a sensing signal may be charge, current, or voltage. The level of a sensing signal may indicate the intensity of transmitted X-rays. A pixel 121 may correspond to a unit area of a battery 200.

In one embodiment, the level of a sensing signal may be inversely proportional to the intensity of X-rays. For example, the lower the intensity of X-rays, a sensing signal of a higher level may be acquired. In another embodiment, the level of a sensing signal may be proportional to the intensity of X-rays.

In one embodiment, a pixel 121 may include a photo-conductor that directly converts X-rays into electrical signals. In another embodiment, a pixel 121 may include a scintillator that converts X-rays into visible light and a photo-diode that converts visible light into an electrical signal.

In one embodiment, an X-ray detection portion 120 may include a pixel calculation portion. The pixel calculation portion may receive a sensing signal and acquire a gray value corresponding to the level of the sensing signal. For example, a pixel operation portion may include an analog-to-digital converter that converts an analog signal into a digital signal.

In one embodiment, a plurality of line scanners 120-1 to 120-3 may be arranged along the X-axis direction. A plurality of line scanners 120-1 to 120-3 may include a first line scanner 120-1, a second line scanner 120-2, and a third line scanner 130-3. When a battery 200 moves in the X-axis direction, a pixel of a first line scanner 120-1 may transmit an acquired sensing signal to a corresponding pixel of a second line scanner 120-2, a pixel of the second line scanner 120-2 may transmit an acquired sensing signal to a corresponding pixel of a third line scanner 120-3, and a pixel of the third line scanner 120-3 may transmit a final sensing signal to a pixel calculation portion. Specific details will be described with reference to FIGS. 4A to 4C.

FIGS. 4A to 4C show diagrams for explaining sensing operation of a line scanner according to one embodiment of the present disclosure. FIGS. 4A to 4C briefly show a part of a battery 200 and a plurality of line scanners 120-1 to 120-3 on the XZ-plane, assuming that these are at the same position on the Y-axis.

Referring to FIGS. 4A to 4C, a plurality of line scanners 120-1 to 120-3 may be arranged along the X-axis direction. Unit areas A to C of a battery 200 may be moved in the X-axis direction by a transfer portion 150.

Referring to FIG. 4A, at a first time, a first unit area A of a battery 200 may be positioned at the top of a pixel of a first line scanner 120-1. In this case, the pixel of the first line scanner 120-1 may receive X-rays that have transmitted through the first unit area A of the battery and acquire a first sensing signal a1 for the transmitted X-rays. In addition, the pixel of the first line scanner 120-1 may transmit the first sensing signal a1 to a pixel of a second line scanner 120-2 and be reset.

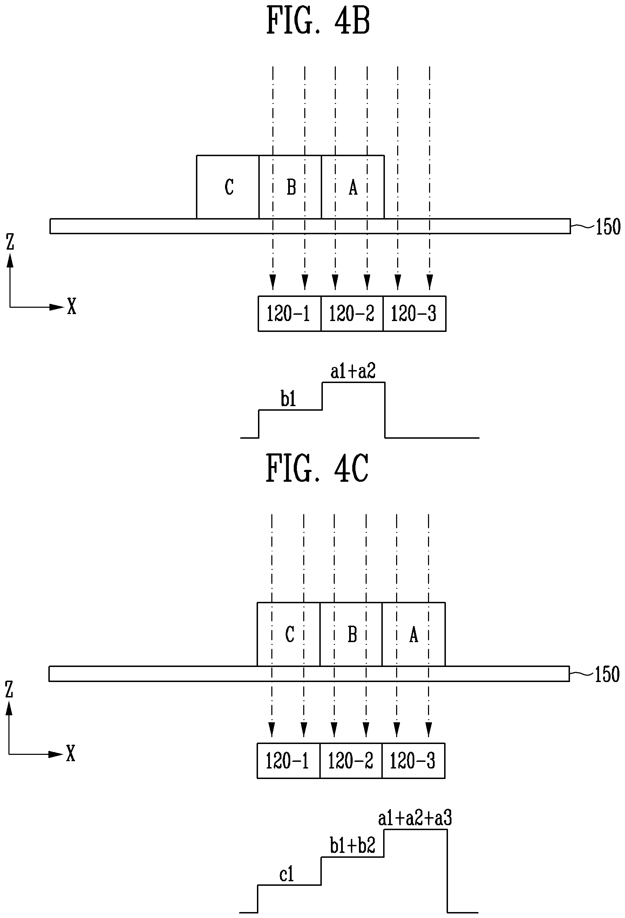

Referring to FIG. 4B, at a second time after the first time, the battery 200 may move in the X-axis direction so that the first unit area A of the battery 200 is positioned at the top of the pixel of the second line scanner 120-2. In this case, the pixel of the second line scanner 120-2 may acquire a second sensing signal a1+a2 formed by merging the first sensing signal a1 received from the first line scanner 120-1 and a sensing signal a2 for transmitted X-rays that have transmitted through the first unit area A of the battery 200. In addition, the pixel of the second line scanner 120-2 may transmit the second sensing signal a1+a2 to a pixel of a third line scanner 120-3 and be reset.

Referring to FIG. 4C, at a third time after the second time, a battery 200 may move in the X-axis direction so that the first unit area A of the battery 200 is positioned at the top of the third pixel of the third line scanner 120-3. In this case, the pixel of the third line scanner 120-3 may acquire, as a final sensing signal, a third sensing signal a1+a2+a3 formed by merging the second sensing signal a1+a2 received from the second line scanner 120-2 and a sensing signal a3 for transmitted X-rays that have transmitted through the first unit area A of the battery 200. In other words, the final sensing signal may be a signal in which the sensing signals a1, a2, and a3, each acquired by the first line scanner 120-1, the second line scanner 120-2, and the third line scanner 120-3, are accumulated (or overlapped). In addition, the pixel of the third line scanner 120-3 may transmit the final sensing signal to a pixel calculation portion and be reset.

A pixel calculation portion may process a value corresponding to the level of a final sensing signal in which sensing signals for a first unit area A are accumulated as a gray value corresponding to the first unit area A among a plurality of gray values.

For example, a pixel calculation portion may receive a final sensing signal for a first unit area A from a pixel of a third line scanner 120-3. A pixel calculation portion may process a value obtained by converting a final sensing signal into a digital signal, as a gray value corresponding to a first unit area A.

In this way, an X-ray detection portion 120 may acquire a gray value corresponding to each unit area A, B, and C.

In this case, a signal processing portion 130 may receive gray values corresponding to unit areas A, B, and C from an X-ray detection portion 120 and acquire an X-ray image including the received gray values. An X-ray image according to the present disclosure has an effect of merging multiple images taken multiple times, and as a result, the contrast difference among different areas may be maximized, thereby improving the detection ability to detect foreign substances.

As described above, an X-ray inspection device 100 according to one embodiment of the present disclosure may be more rapidly than a method in which X-rays are irradiated in multiple directions in a rotational manner and may acquire an X-ray image with maximized contrast differences by using the TDI method. Accordingly, an X-ray inspection device 100 according to one embodiment of the present disclosure may accurately detect foreign substances and detect low-density metal foreign substances.

Meanwhile, the number of the above-described line scanners 120-1 to 120-3 may be varied in various ways. Meanwhile, the above-described line scanners 120-1 to 120-3 have been described as including pixels arranged in 1 x n, but are not limited thereto, and they may be modified in various ways, such as including pixels arranged in m x n. Here, m and n are natural numbers. In this case, a transfer portion 150 may move a battery 200 in the X-axis direction as far as a distance corresponding to m pixels per unit time.

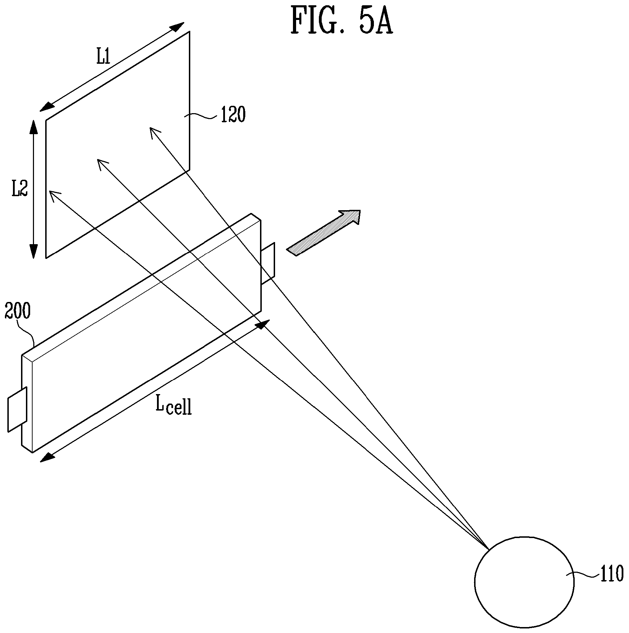

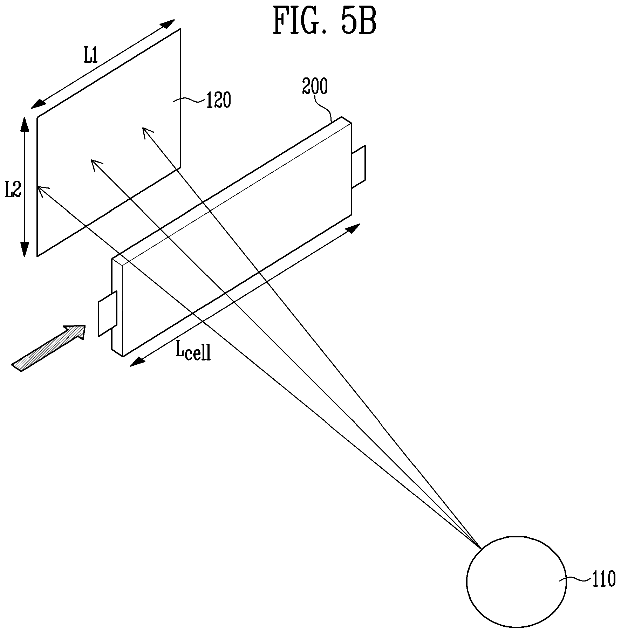

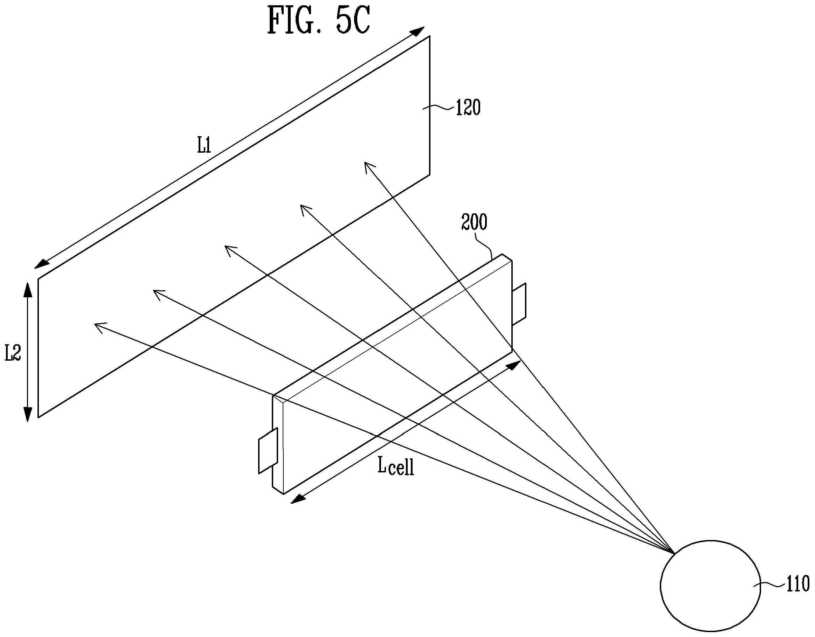

FIGS. 5A, 5B, and 5C show diagrams for explaining an X-ray detection portion according to another embodiment of the present disclosure.

Referring to FIGS. 5A and 5B, an X-ray detection portion 120 may include a flat panel detector. A flat panel detector may include a pixel array including a plurality of pixels. For example, a pixel array may include pixels arranged in m x n.

Pixels may each detect transmitted X-rays that have transmitted through a unit area of a battery 200 and acquire a sensing signal for the transmitted X-rays. For example, a sensing signal may be charge, current, or voltage. The level of a sensing signal may indicate the intensity of transmitted X-rays. Pixels may correspond to a unit area of a battery 200.

In one embodiment, the level of a sensing signal may be inversely proportional to the intensity of X-rays. For example, the lower the intensity of X-rays, a sensing signal of a higher level may be acquired. In another embodiment, the level of a sensing signal may be proportional to the intensity of X-rays.

In one embodiment, pixels may include a photo-conductor that directly converts X-rays into electrical signals. In another embodiment, pixels may include a scintillator that converts X-rays into visible light and a photo-diode that converts visible light into an electrical signal.

In one embodiment, an X-ray detection portion 120 may include a pixel calculation portion. The pixel calculation portion may receive a sensing signal and acquire a gray value corresponding to the level of the sensing signal. For example, a pixel operation portion may include an analog-to-digital converter that converts an analog signal into a digital signal.

In one embodiment, a first length L1 of a flat panel detector may be shorter than the length L_{cell} in a tab protrusion direction of a battery 200.

Accordingly, an image for an entire battery 200 may be acquired by acquiring images of the battery 200 multiple times while moving the battery 200 in one direction using a transfer portion. In other words, an X-ray image of a battery 200 may be obtained by merging a plurality of images acquired while moving the battery 200.

In another embodiment, as shown in FIG. 5C, a first length L1 of a flat panel detector may be longer than a length L_{cell} in a tab protrusion direction of a battery 200. In addition, a first length L1 of a flat panel detector may be longer than a second length L2 of the flat panel detector.

For example, as illustrated in FIG. 5C, a first length L1 and a second length L2 of a flat panel detector may be optimized to fit the shape of a battery 200, and as an X-ray imaging area is thereby increased, an image of the entire battery 200 may be acquired without moving the battery 200. In other words, the number of time of measurement and the measurement time required to acquire an X-ray image of an entire battery 200 may be reduced.

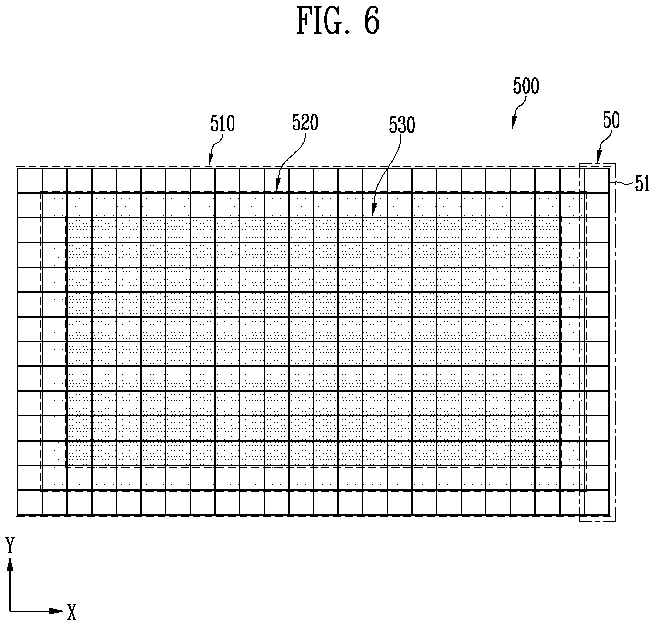

FIG. 6 shows a diagram for explaining an X-ray image according to one embodiment of the present disclosure.

Referring to FIG. 6, an X-ray image 500 according to one embodiment may include a plurality of gray values. An X-ray image 500 may be generated by a signal processing portion 130. Gray values 51 may be arranged according to row and column directions. A column direction may be the X-axis direction, and a row direction may be the Y-axis direction. In one embodiment, the number of gray values 51 included in one column line 50 may be equal to the number of pixels included in one line scanner. Alternatively, in another embodiment, gray values included in an X-ray image 500 may each correspond to pixels included in a flat panel detector.

An X-ray image 500 may include a plurality of areas 510 to 530. A plurality of areas 510 to 530 may include a first area 510, a second area 520, and a third area 530. Each area 510 to 530 may include a plurality of gray values. In other words, each area 510 to 530 may be a set of gray values positioned at different positions.

A first area 510 may represent a first battery area 210H remaining after excluding a third battery area 230H and a second battery area 220H, among areas in a battery 200 where a separator 215 is stacked. In other words, a first area 510 may include gray values acquired by detecting X-rays that have transmitted through a first battery area 210H.

A second area 520 may represent a second battery area 220H remaining after excluding a third battery area 230H, among areas in a battery 200 where an anode layer 220 and a separator 215 are stacked together. In other words, a second area 520 may include gray values acquired by detecting X-rays that have transmitted through a second battery area 220H.

A third area 530 may represent a third battery area 230H where a cathode layer 230, an anode layer 220, and a separator 215 are stacked together in a battery 200. In other words, a third area 530 may include gray values acquired by detecting X-rays that have transmitted through a third battery area 230H.

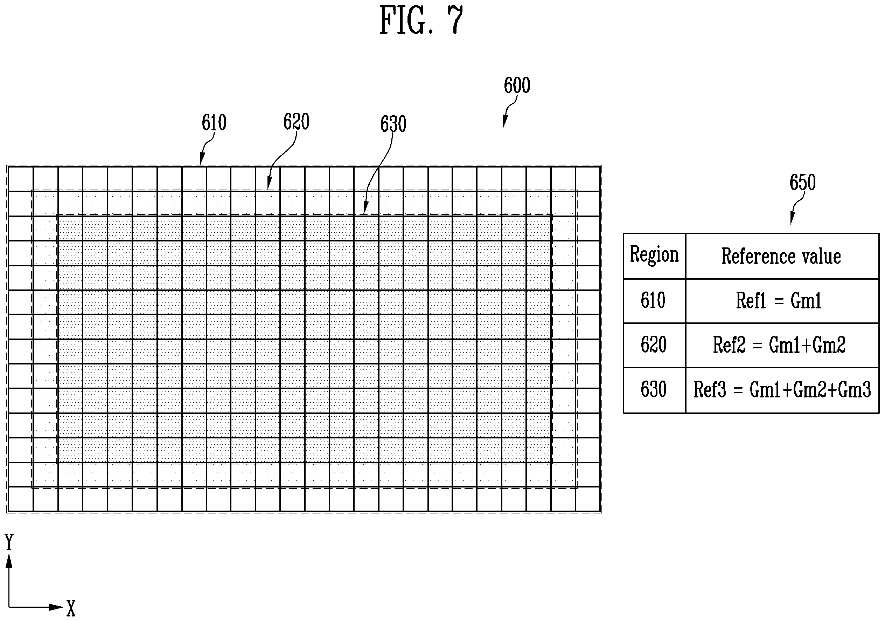

FIG. 7 shows a diagram for explaining a reference value according to one embodiment of the present disclosure.

Referring to FIG. 7, an inspection portion 140 according to one embodiment may compare gray values included in a selected area in an X-ray image 600 with a reference value corresponding to the selected area.

An X-ray image 600 may include a plurality of areas 610 to 630. A plurality of areas 610 to 630 may include a first area 610 to a third area 630.

A first area 610 may include gray values acquired by detecting X-rays that have transmitted through a first battery area 210H. A second area 620 may include gray values acquired by detecting X-rays that have transmitted through a second battery area 220H. A third area 630 may include gray values acquired by detecting X-rays that have transmitted through a third battery area 230H.

In one embodiment, an inspection portion 140 may compare each of gray values included in a first area 610 with a first reference value Ref1 corresponding to the first area 610. An inspection portion 140 may select gray values that are greater than a corresponding first reference value Ref1 among gray values included in a first area 610. An inspection portion 140 may extract gray values adjacent to each other among selected gray values as one object. An inspection portion 140 may determine whether a battery 200 is defective based on the size and shape of an object.

In one embodiment, an inspection portion 140 may compare each of gray values included in a second area 620 with a second reference value Ref2 corresponding to the second area 620. An inspection portion 140 may select gray values that are greater than a corresponding second reference value Ref2 among gray values included in a second area 620. An inspection portion 140 may extract gray values adjacent to each other among selected gray values as one object. An inspection portion 140 may determine whether a battery 200 is defective based on the size and shape of an object.

In one embodiment, an inspection portion 140 may compare each of gray values included in a third area 630 with a third reference value Ref3 corresponding to the third area 630. An inspection portion 140 may select gray values that are greater than a corresponding third reference value Ref3 among gray values included in a third area. An inspection portion 140 may extract gray values adjacent to each other among selected gray values as one object. An inspection portion 140 may determine whether a battery 200 is defective based on the size and shape of an object.

In one embodiment, an inspection portion 140 may select gray values that are greater than a corresponding reference value among gray values included in a selected area. An inspection portion 140 may extract gray values adjacent to each other among selected gray values as one object. An inspection portion 140 may determine whether a battery 200 is defective based on the size and shape of an object.

In one embodiment, when the size of an object is larger than a reference size, an inspection portion 140 may determine that a battery 200 is defective. For example, a reference size may be preset to 2x2, 2x1, 1x2, or the like.

In one embodiment, when the size of an object is smaller than or equal to a reference size, an inspection portion 140 may determine the object to be noise. In this case, the inspection portion 140 may not determine that the battery 200 is defective.

In one embodiment, when the shape of an object is a reference shape, an inspection portion 140 may determine that a battery 200 is defective. The shape may be a connection of gray values greater than a corresponding reference value. A reference shape may include at least one selected from a triangular shape, a rectangular shape, a circular shape, a ring shape, and an irregular shape.

In one embodiment, an X-ray inspection device 100 may further include a memory. A memory is a component storing data. For example, a memory may be implemented as a nonvolatile memory, but is not limited thereto, and it may be implemented by being transformed into a volatile memory.

In one embodiment, a memory may store a plurality of reference values Ref1 to Ref3. A plurality of reference values Ref1 to Ref3 may respectively correspond to a plurality of areas 610 to 630. For example, a memory may store table information 650 indicating the correspondence between reference values and areas.

An inspection portion 140 may determine one area of a plurality of areas 610 to 630 as a selected area. An inspection portion 140 may compare a reference value corresponding to a selected area among a plurality of reference values Ref1 to Ref3 stored in a memory with a gray value included in the selected area.

In one embodiment, each of a plurality of reference values Ref1 to Ref3 may be a predetermined value based on at least one of the type, number, and density of materials included in each area 610 to 630.

In one embodiment, a first reference value Ref1 may be a predetermined value based on the number of separators 215. A second reference value Ref2 may be a predetermined value based on the number of separators 215 and the number of anode layers 220. A third reference value Ref3 may be a predetermined value based on the number of separators 215 and the numbers of anode layers 220 and cathode layers 230.

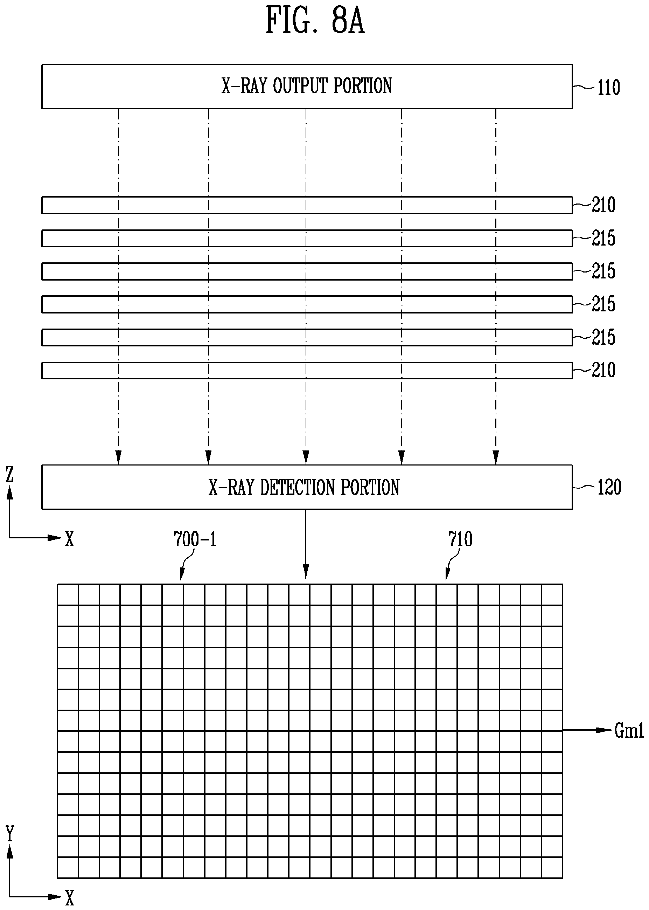

FIGS. 8A to 8C show diagrams for explaining a method of calculating a reference value according to one embodiment of the present disclosure.

Referring to FIGS. 7 and 8A, a first reference value Ref1 may be the same as a first gray value Gm 1. For example, a first gray value Gm 1 may be acquired by detecting X-rays that have transmitted through a separator 215.

For example, an X-ray output portion 110 may irradiate X-rays toward a separator 215. Here, the number of separators 215 may be the same as that included in a battery 200. In this case, an X-ray detection portion 120 may detect the X-rays that have transmitted through the separator 215 and acquire gray values. A signal processing portion 130 may acquire a first X-ray image 700-1 including gray values. A signal processing portion 130 may acquire an average value of gray values included in an area 710 corresponding to a separator 215 in a first X-ray image 700-1 as a first gray value Gm1.

Meanwhile, in the above description, only a separator 215 is used as an example, but a first gray value Gm1 may be acquired by detecting X-rays that have transmitted through a separator 215 and an exterior material layer 210.

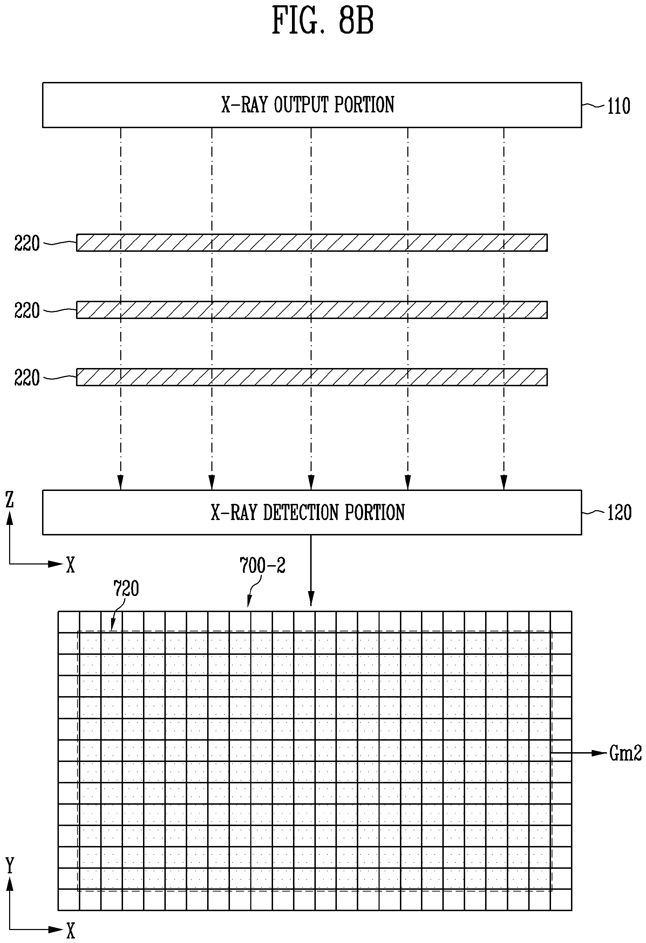

Referring to FIGS. 7 and 8B, a second reference value Ref2 may be the sum of a first gray value Gm1 and a second gray value Gm2. A second gray value Gm2 may be acquired by detecting X-rays that have transmitted through an anode layer 220.

For example, an X-ray output portion 110 may irradiate X-rays toward at least one anode layer 220. Here, the number of anode layers 220 may be the same as that included in a battery 200. In this case, an X-ray detection portion 120 may detect the X-rays that have transmitted through the anode layer 220 and acquire gray values. A signal processing portion 130 may acquire a second X-ray image 700-2 including gray values. A signal processing portion 130 may acquire an average value of gray values included in an area 720 corresponding to an anode layer 220 in a second X-ray image 700-2 as a second gray value Gm2.

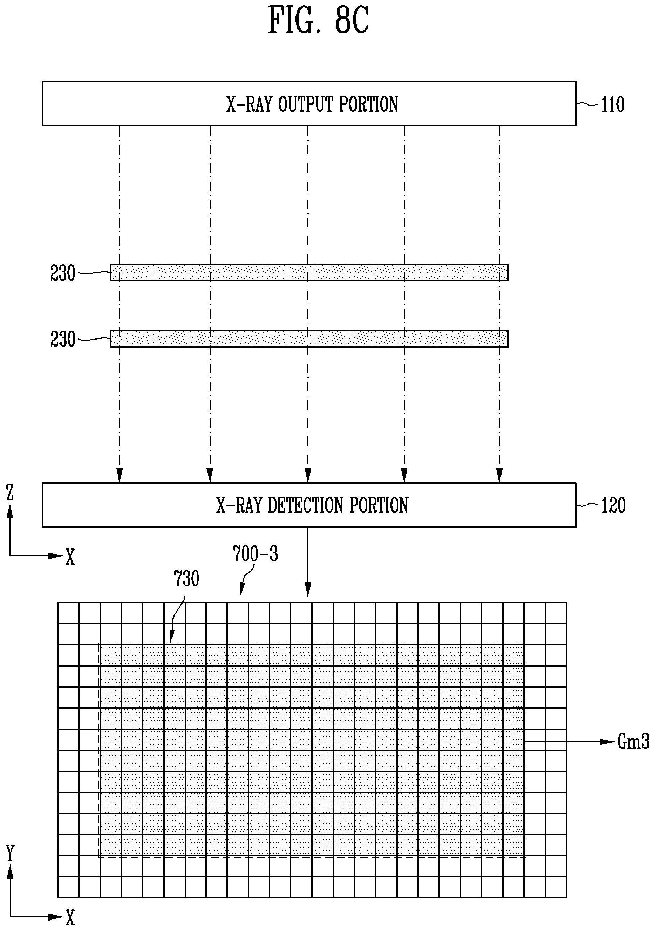

Referring to FIGS. 7 and 8C, in one embodiment, a third reference value Ref3 may be the sum of a first gray value Gm 1, a second gray value Gm2, and a third gray value Gm3. A third gray value Gm3 may be acquired by detecting X-rays that have transmitted through a cathode layer 230.

For example, an X-ray output portion 110 may irradiate X-rays toward at least one cathode layer 230. Here, the number of cathode layers 230 may be the same as that included in a battery 200. In this case, an X-ray detection portion 120 may detect the X-rays that have transmitted through the cathode layer 230 and acquire gray values. A signal processing portion 130 may acquire a third X-ray image 700-3 including gray values. A signal processing portion 130 may acquire an average value of gray values included in an area 730 corresponding to a cathode layer 230 in a third X-ray image 700-3 as a third gray value Gm3.

In one embodiment, a first reference value Ref1 may be smaller than a second reference value Ref2. A second reference value Ref2 may be smaller than a third reference value Ref3. In other words, since different reference values are applied even to a same gray value depending on the area, a foreign substance may be detected or a foreign substance may not be detected.

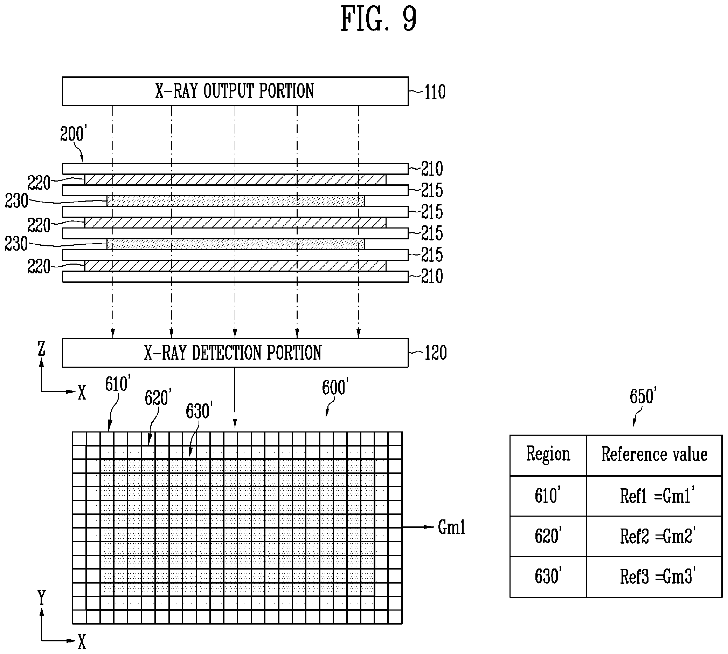

FIG. 9 shows a diagram for explaining a method of calculating a reference value according to another embodiment of the present disclosure.

Referring to FIGS. 2B and 9, a first reference value Ref1, a second reference value (Ref2), and a third reference value Ref3 may be calculated as gray values acquired by irradiating X-rays to a normal battery 200'. A normal battery 200' may be, for example, a battery including a preset number of cathode layers 230, anode layers 220, separators 215, and exterior material layers 210. A preset number may mean the number of cathode layers 230, anode layers 220, separators 215, and exterior material layers 210 that are determined to be normal.

Accordingly, an X-ray image 600' corresponding to a normal battery 200' may be acquired. An X-ray image 600' may include a plurality of areas 610' to 630'. A plurality of areas 610' to 630' may include a first area 610' to a third area 630'.

A first area 610' may include gray values acquired by detecting X-rays that have transmitted through a first battery area 210H of a normal battery 200'. A first reference value Ref1 may be set based on gray values acquired by detecting X-rays that have transmitted through a first battery area 210H of a normal battery 200'. For example, an average value Gm1' of gray values acquired by detecting X-rays that have transmitted through a first battery area 210H of a normal battery 200' may be set as a first reference value Ref1.

The second area 620' may include gray values acquired by detecting X-rays that have transmitted through a second battery area 220H of a normal battery 200'. A second reference value Ref2 may be set based on gray values acquired by detecting X-rays that have transmitted through a second battery area 220H of a normal battery 200'. For example, an average value Gm2' of gray values acquired by detecting X-rays that have transmitted through a second battery area 220H of a normal battery 200' may be set as a second reference value Ref2.

The third area 630' may include gray values acquired by detecting X-rays that have transmitted through a third battery area 230H of a normal battery 200'. A third reference value Ref3 may be set based on gray values acquired by detecting X-rays that have transmitted through a third battery area 230H of a normal battery 200'. For example, an average value Gm3' of gray values acquired by detecting X-rays that have transmitted through a third battery area 230H of a normal battery 200' may be set as a third reference value Ref3.

In one embodiment, an X-ray inspection device 100 may further include a memory. A memory is a component storing data. For example, a memory may be implemented as a nonvolatile memory, but is not limited thereto, and it may be implemented by being transformed into a volatile memory.

In one embodiment, a memory may store a plurality of reference values Ref1 to Ref3. A plurality of reference values Ref1 to Ref3 may respectively correspond to a plurality of areas 610' to 630'. For example, a memory may store table information 650' indicating the correspondence between reference values and areas.

An inspection portion may compare a gray value acquired by radiating X-rays to a battery 200 to be inspected with a first reference value Ref1, a second reference value Ref2, and a third reference value Ref3 set as described above 140 to determine whether the battery 200 to be inspected is defective. For example, it is possible to determine a stack number defect of a cathode layer 230, an anode layer 220, a separator 215, and/or an exterior material layer 210.

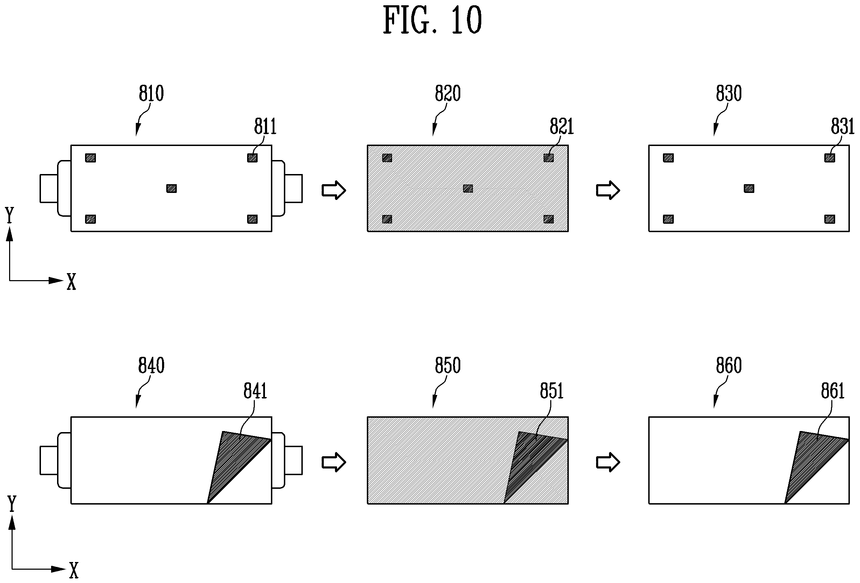

FIG. 10 shows a diagram for explaining a battery defect according to one embodiment of the present disclosure.

Referring to FIG. 10, it shows a first battery 810 according to one embodiment in which a foreign substance defect has occurred, and a second battery 840 in which an electrode folding defect has occurred.

In one embodiment, a foreign substance 811 may be present inside a first battery 810. An X-ray inspection device 100 may irradiate X-rays a the first battery 810. An X-ray inspection device 100 may detect X-rays that have transmitted through a first battery 810 and acquire a first X-ray image 820. A first X-ray image 820 may include a plurality of gray values. A gray value may represent the intensity of X-rays that transmitted through a first battery 810. The intensity of X-rays that have transmitted through an area where a foreign substance 811 is present may be lower than the intensity of X-rays that transmitted through a surrounding area. In this case, gray values included in an area 821 of the first X-ray image 820 corresponding to the foreign substance 811 may have larger values than gray values included in the surrounding area.

An X-ray inspection device 100 may acquire a first binarized image 830 by comparing a gray value of a first X-ray image 820 with a corresponding reference value. A binarized image 830 may include a plurality of pixel values. Each of a plurality of pixel values may have one of a first value and a second value. Each pixel value may be a result of comparing each gray value with a corresponding reference value, and each gray value may be converted to one value of a first value and a second value. For example, when a gray value is greater than a corresponding reference value, the gray value may be converted to a pixel value of a first value, and when a gray value is smaller than or equal to a corresponding reference value, the gray value may be converted to a pixel value of a second value. In one embodiment, a first value may be a value of 0, and a second value may be a value of 255. The lower a pixel value, the darker.

Here, gray values of an area 821 corresponding to a foreign substance 811 may be greater than a reference value. In this case, the corresponding gray values may be converted to pixel values of a first value. An X-ray inspection device 100 may identify adjacent pixel values among pixel values of a first value included in a first binarized image 830 as one object 831.

An X-ray inspection device 100 may determine there is a foreign substance defect in a battery 200 when the size of an object 831 is larger than a reference size. In this case, the battery 200 may be classified as defective and removed. An X-ray inspection device 100 may determine that a battery 200 is normal when the size of an object 831 is smaller than or equal to a reference size and no other defects are present. In this case, the battery 200 may be classified as normal.

In one embodiment, a second battery 840 may have an electrode layer 831 in a folded state. An X-ray inspection device 100 may irradiate X-rays to a second battery 840. An X-ray inspection device 100 may detect X-rays that have transmitted through a second battery 840 and acquire a second X-ray image 850. The intensity of X-rays that have transmitted through an area where an electrode layer 831 in a folded state is present may be lower than the intensity of X-rays that have transmitted through a surrounding area. In this case, the gray values included in an area 851 of the second X-ray image 850 corresponding to the electrode layer 831 in a folded state may have a greater value than the gray values included in the surrounding area.

An X-ray inspection device 100 may acquire a second binarized image 860 by comparing a gray value of a second X-ray image 850 with a corresponding reference value. A second binarized image 860 may include a plurality of pixel values. Each of a plurality of pixel values may have one of a first value and a second value.

Here, gray values of an area 851 corresponding to an electrode layer 831 in a folded state may be greater than a reference value. In this case, the corresponding gray values may be converted to pixel values of a first value. An X-ray inspection device 100 may identify adjacent pixel values among the pixel values of a first value included in a second binarized image 860 as one object 861.

In one embodiment, an X-ray inspection device 100 may determine that a battery 200 is defective when the shape of an object 861 is a reference shape. A reference shape may be one or more selected from a triangular shape, a rectangular shape, a circular shape, a ring shape, and an irregular shape.

In one embodiment, an X-ray inspection device 100 may determine that a battery 200 is defective when the shape of an object 861 is the reference shape and the size of the object 861 is larger than or equal to the reference size.

In one embodiment, an X-ray inspection device 100 may further include at least one of a display, a speaker, and a communication portion. For example, when an X-ray inspection device 100 determines that a battery 200 is defective, it may display information indicating that the battery 200 is defective on a display. For example, when an X-ray inspection device 100 determines that a battery 200 is defective, it may output information indicating that the battery 200 is defective through a speaker. For example, when an X-ray inspection device 100 determines that a battery 200 is defective, it may transmit information indicating that the battery 200 is defective to another electronic device through a communication portion.

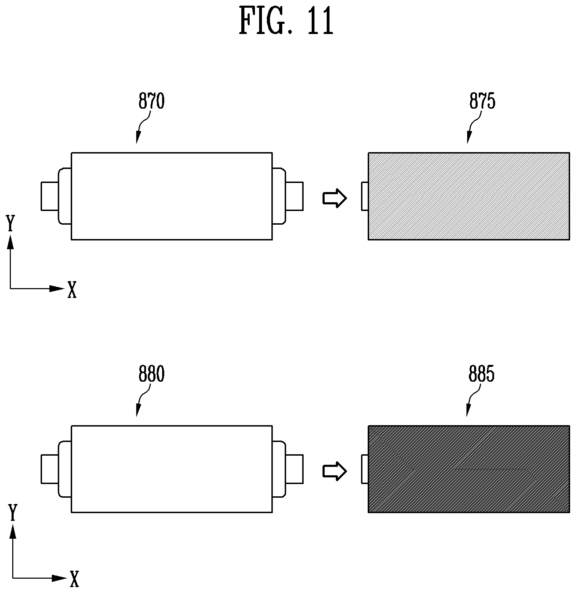

FIG. 11 shows a diagram for explaining a battery defect according to another embodiment of the present disclosure.

Referring to FIG. 11, it shows a first battery 870 according to another embodiment in which the number of stacked cathode layers and anode layers is normal, and a second battery 880 in which the number of stacked cathode layers and anode layers is defective.

In one embodiment, an X-ray inspection device 100 may irradiate X-rays to a first battery 870. An X-ray inspection device 100 may detect X-rays that have transmitted through a first battery 870 and acquire a first X-ray image 875. A first X-ray image 875 may include a plurality of gray values. A gray value may represent the intensity of X-rays that have transmitted through a first battery 870. An average value of gray values included in a selected area in a first X-ray image 875 may be a value within a preset range from a reference value. For example, an average value of gray values included in a selected area in a first X-ray image 875 may be smaller than an upper error limit of a reference value and greater than a lower error limit of the reference value. Accordingly, the number of stacked cathode layers and anode layers of a first battery 870 may be determined to be normal.

In one embodiment, an X-ray inspection device 100 may irradiate X-rays to a second battery 880. An X-ray inspection device 100 may detect X-rays that have transmitted through a second battery 880 and acquire a second X-ray image 885. A second X-ray image 885 may include a plurality of gray values. A gray value may represent the intensity of X-rays that have transmitted through a second battery 880. An average value of gray values included in a selected area in a second X-ray image 885 may be out of a preset range from a reference value. For example, an average value of gray values included in a selected area in a second X-ray image 885 may be greater than an upper error limit of a reference value or smaller than a lower error limit of the reference value. Accordingly, the number of stacked cathode layers and/or anode layers of a second battery 880 may be determined to be defective.

For example, when an average value of gray values included in a selected area in a second X-ray image 885 is greater than an upper error limit of a reference value, the number of stacked cathode layers and/or anode layers may be greater than a normal number. When an average value of gray values included in a selected area in a second X-ray image 885 is smaller than a lower error limit of a reference value, the number of stacked cathode layers and/or anode layers may be smaller than a normal number.

In FIG. 11, when determining whether a battery is defective, it is explained based on the number of stacked cathode layers and anode layers, but it is not limited thereto, and whether the number of stacks of other components included in a battery, such as a separator and an exterior material layer, is defective may also be considered.

In one embodiment, a reference value may be determined as the sum of gray values of each component included in a battery, as described with reference to FIGS. 8A to 8C.

In another embodiment, a reference value may be a gray value acquired by simultaneously measuring all components of a normal battery, as described in FIG. 9.

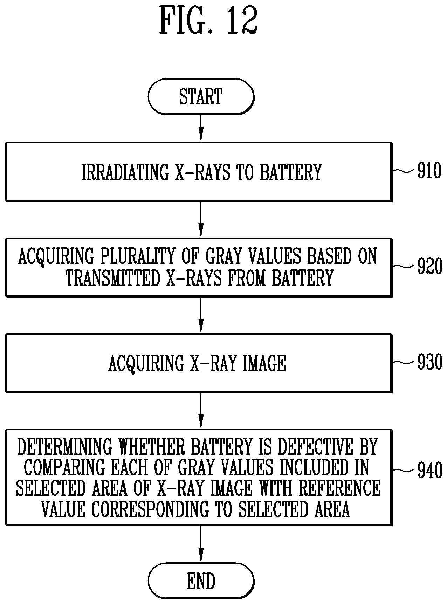

FIG. 12 shows a diagram for explaining an X-ray inspection method according to one embodiment of the present disclosure.

Referring to FIG. 12, an X-ray inspection method of an X-ray inspection device 100 according to one embodiment of the present disclosure may include a step 910 of irradiating X-rays to a battery 200; a step 920 of acquiring a plurality of gray values based on transmitted X-rays from the battery 200; a step 930 of acquiring an X-ray image including the plurality of gray values; and a step 940 of determining whether the battery 200 is defective by comparing each of the gray values included in the selected area of the X-ray image with a reference value corresponding to the selected area.

Specifically, X-rays may be irradiated to a battery 200 (910).

In one embodiment, a battery 200 may include a plurality of electrode layers 220 and 230 and a separator 215 interposed between the plurality of electrode layers 220 and 230. In this case, in a step of irradiating X-rays, the X-rays may be irradiated in a direction in which the plurality of electrode layers 220 and 230 are stacked. For example, a direction in which a plurality of electrode layers 220 and 230 are stacked may be the Z-axis direction.

In addition, a plurality of gray values may be acquired based on X-rays that have transmitted from a battery 200 (920). By detecting transmitted X-rays that have transmitted through a unit area of a battery 200, a gray value may be acquired. A gray value may represent the intensity of transmitted X-rays. In one embodiment, a gray value may be a value corresponding to the level of a sensing signal acquired through one pixel. For example, when the FPD method is used, sensing signals each acquired by a plurality of pixels may correspond to gray values. In another embodiment, a gray value may be a value corresponding to the level of a final sensing signal accumulated from sensing signals acquired through multiple pixels according to the TDI method.

In addition, an X-ray image including a plurality of gray values may be acquired (930). An X-ray image may include a plurality of gray values arranged in row and column directions. For example, a plurality of gray values may be arranged in p x q. Here, p and q are natural numbers.

In one embodiment, the step 930 of acquiring an X-ray image may include: a step of acquiring a plurality of X-ray images based on X-rays irradiated multiple times; and a step of merging the plurality of X-ray images. For example, X-rays irradiated multiple times may each have the same output or different outputs.

In addition, each of gray values included in a selected area of an X-ray image may be compared with a reference value corresponding to the selected area to determine whether a battery 200 is defective (940). A defect in a battery 200 may be one of a foreign substance defect, an electrode folding defect, and an electrode layer number defect.

In one embodiment, a first reference value corresponding to a first area representing an area where a cathode layer 230, an anode layer 220, and a separator 215 are stacked together and a second reference value corresponding to a second area where an anode layer 220 and a separator 215 are stacked together may be stored. Here, a selected area may be one area of a first area and a second area. A first reference value may be greater than a second reference value. A first area may be an area representing an area where a cathode layer 230, an anode layer 220, and a separator 215 are stacked together. The second area may be an area where an anode layer 220 and a separator 215 are stacked together and may represent an area excluding an area where a cathode layer 230, an anode layer 220, and a separator 215 are stacked together. A first reference value and a second reference value may be stored in a memory.

In one embodiment, a first reference value may be a predetermined value based on the number of cathode layers 230, the number of anode layers 220, and the number of separators 215. A second reference value may be a predetermined value based on the number of anode layers 220 and the number of separators 215.

For example, a first reference value and a second reference value may be acquired by measuring gray values corresponding to each of a cathode layer 230, an anode layer 220, and a separator 215 and then combining them.

Alternatively, a first reference value a second reference value may be acquired by measuring gray value for a normal battery in which a cathode layer 230, an anode layer 220, and a separator 215 are stacked in a preset number.

In one embodiment, in a step of determining whether a battery 200 is defective, a gray value greater than a reference value corresponding to a selected area may be selected from among gray values included in the selected area. Adjacent pixel values among selected gray values may be extracted as objects. Whether a battery 200 is defective may be determined based on the shape and size of an object.

In one embodiment, a step of determining whether a battery 200 is defective may include: a step of converting a gray value greater than a reference value corresponding to the selected area among the gray values included in the selected area into a pixel value of a first value and converting a gray value smaller than or equal to the reference value corresponding to the selected area into a pixel value of a second value; and a step of acquiring a binarized image including the pixel value of the first value and the pixel of the second value.

In one embodiment, the step of determining whether the battery is defective may include: a step of extracting adjacent pixel values as an object among pixel values of a first value included in the binarized image; and a step of determining whether the battery is defective based on one or more selected from the group consisting of shape and size of the object.

In one embodiment, in the step of determining whether a battery 200 is defective, when the size of an object is larger than a reference size, the battery 200 may be determined to be defective. A reference size may be a preset value, and for example, a reference size may be set to 2x2, 1x2, 2x1, or the like. Information about a reference size may be stored in a memory.

In one embodiment, in the step of determining whether a battery 200 is defective, when the shape of an object is a reference shape, the battery 200 may be determined to be defective. Here, a reference shape may include at least one of a triangular shape, a rectangular shape, a circular shape, and a ring shape. Information about a reference shape may be stored in a memory.

In one embodiment, in a step of determining whether a battery 200 is defective, an average value of pixel values included in a selected area may be compared with a reference value corresponding to the selected area to determine whether the battery 200 is defective. In this case, when the average value is greater than the reference value corresponding to the selected area, the battery 200 may be determined to be defective.

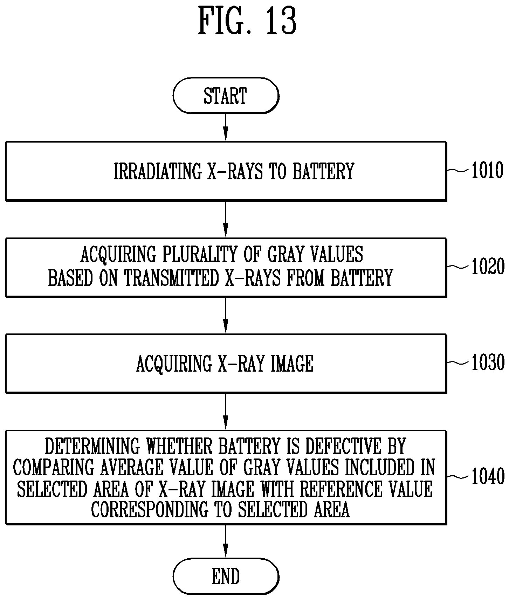

FIG. 13 shows a diagram for explaining an X-ray inspection method according to one embodiment of the present disclosure.

Referring to FIG. 13, an X-ray inspection method of an X-ray inspection device 100 according to one embodiment of the present disclosure may include: a step 1010 of irradiating X-rays to a battery 200; a step 1020 of acquiring a plurality of gray values based on transmitted X-rays from the battery 200; a step 1030 of acquiring an X-ray image including the plurality of gray values; and a step 1040 of determining whether the battery is defective by comparing an average value of the gray values included in the selected area of the X-ray image with a reference value corresponding to the selected area.

In one embodiment, a first reference value corresponding to a first area representing an area where a cathode layer 230, an anode layer 220, and a separator 215 are stacked together and a second reference value corresponding to a second area where an anode layer 220 and a separator 215 are stacked together may be stored.

In this case, in a step of determining whether the battery 200, one area of the first area and the second area may be determined as the selected area, and the battery may be determined to be defective when the average value is greater or smaller than the reference value corresponding to the area among the first reference value and the second reference value.

### [Reference numerals]

- 100:: X-ray inspection device
- 110:: X-ray output portion
- 120:: X-ray detection portion
- 130:: signal processing portion
- 140:: inspection portion
- 150:: transfer portion
- 160:: control portion
- 200:: battery
- 210:: exterior material layer
- 215:: separator
- 220:: anode layer
- 230:: cathode layer

## Claims

1. An X-ray inspection device comprising:
an X-ray output portion irradiating X-rays to a battery including a plurality of electrode layers and a separator interposed between the plurality of electrode layers;
an X-ray detection portion acquiring a plurality of gray values based on intensity of the X-rays that have transmitted through the battery among the X-rays;
a signal processing portion acquiring an X-ray image including the plurality of gray values; and
an inspection portion determining whether the battery is defective based on a comparison result of gray values included in a selected area of the X-ray image and a reference value corresponding to the selected area.

2. The X-ray inspection device according to claim 1, wherein the inspection portion extracts gray values greater than the reference value corresponding to the selected area from among the gray values included in the selected area as an object and determines whether the battery is defective based on one or more selected from the group consisting of size and shape of the object.

3. The X-ray inspection device according to claim 2, wherein the inspection portion determines that the battery is defective when the size of the obj ect is larger than a reference size.

4. The X-ray inspection device according to claim 2, wherein the inspection portion determines that the battery is defective when the shape of the object is a reference shape.

5. The X-ray inspection device according to claim 1, wherein the inspection portion determines that the battery is defective when an average value of the gray values included in the selected area is greater than an upper error limit of the reference value corresponding to the selected area, or when the average value is smaller than a lower error limit of the reference value corresponding to the selected area.

6. The X-ray inspection device according to claim 5, wherein the reference value is a gray value corresponding to a normal battery.

7. The X-ray inspection device according to claim 6, wherein the gray value corresponding to a normal battery is sum of gray values corresponding to two or more selected from the group consisting of at least one cathode layer, at least one anode layer, at least one separator, and at least one exterior material layer included in the normal battery.

8. The X-ray inspection device according to claim 1, further comprising a memory storing a plurality of reference values corresponding to each of a plurality of areas, wherein the inspection portion determines one of the plurality of areas as the selected area.

9. The X-ray inspection device according to claim 8, wherein the plurality of electrode layers include at least one cathode layer and at least one anode layer having a larger size than the cathode layer, and the plurality of areas include: a first area corresponding to an area in which the at least one cathode layer, the at least one anode layer, and the separator are stacked together; and a second area corresponding to an area in which the at least one anode layer and the separator are stacked together.

10. The X-ray inspection device according to claim 9, wherein among the plurality of reference values, a first reference value corresponding to the first area is a predetermined value based on number of the at least one cathode layer, number of the at least one anode layer, and number of the separator, and among the plurality of reference values, a second reference value corresponding to the second area is a predetermined value based on the number of the at least one anode layer and the number of the separator.

11. The X-ray inspection device according to claim 1, wherein the reference value is a predetermined value.

12. The X-ray inspection device according to claim 1, wherein the reference value is an average value of gray values within a preset area.

13. The X-ray inspection device according to claim 12, wherein the preset area is an entire area corresponding to the battery in the X-ray image.

14. The X-ray inspection device according to claim 12, wherein the preset area is the selected area.

15. The X-ray inspection device according to claim 1, wherein the X-ray detection portion includes: a plurality of line scanners detecting, at different times, transmitted X-rays that have transmitted through a unit area of the battery among the X-rays that have transmitted through the battery, and acquiring each of sensing signals for the transmitted X-rays; and
a pixel operation portion processing a value corresponding to a final sensing signal in which the sensing signals are accumulated as a gray value corresponding to the unit area among the plurality of gray values.

16. The X-ray inspection device according to claim 1, wherein the X-ray detection portion includes a flat panel detector including a plurality of pixels that each detect X-rays.

17. The X-ray inspection device according to claim 16, wherein a first length of the flat panel detector in a first direction, which is a direction in which an electrode tab protrudes from the electrode layers, is longer than a length of the battery in the first direction.

18. The X-ray inspection device according to claim 17, wherein a second length of the flat panel detector in the first direction and a second direction perpendicular to a stacking direction of the electrode layers is shorter than the first length of the flat panel detector.

19. The X-ray inspection device according to claim 1, wherein the X-ray output portion irradiates the X-rays in a direction in which the plurality of electrode layers are stacked.

20. The X-ray inspection device according to claim 1, wherein the signal processing portion acquires a plurality of X-ray images and then merges the X-ray images to acquire a final X-ray image.

21. The X-ray inspection device according to claim 20, wherein the plurality of X-ray images are X-ray images acquired from X-rays of different outputs irradiated from the X-ray output portion.

22. The X-ray inspection device according to claim 1, wherein the inspection portion determines an area of interest in the X-ray image and sets the selected area within the area of interest.

23. The X-ray inspection device according to claim 22, wherein the area of interest is an area corresponding to the battery in the X-ray image.

24. The X-ray inspection device according to claim 22, wherein the inspection portion determines the area of interest based on a preset pattern included in the X-ray image.

25. The X-ray inspection device according to claim 22, wherein the inspection portion determines the area of interest based on a change in a gray value in a preset direction in the X-ray image.

26. An X-ray inspection method comprising:
a step of irradiating X-rays to a battery;
a step of acquiring a plurality of gray values based on transmitted X-rays from the b attery;
a step of acquiring an X-ray image including the plurality of gray values; and
a step of determining whether the battery is defective by comparing each of the gray values included in the selected area of the X-ray image with a reference value corresponding to the selected area.

27. The X-ray inspection method according to claim 26, wherein the battery includes a plurality of electrode layers and a separator interposed between the plurality of electrode layers, and in the step of irradiating X-rays, the X-rays are irradiated in a direction in which the plurality of electrode layers are stacked.

28. The X-ray inspection method according to claim 26, wherein the step of determining whether the battery is defective includes:
a step of converting a gray value greater than a reference value corresponding to the selected area among the gray values included in the selected area into a pixel value of a first value and converting a gray value smaller than or equal to the reference value corresponding to the selected area into a pixel value of a second value; and
a step of acquiring a binarized image including the pixel value of the first value and the pixel of the second value.

29. The X-ray inspection method according to claim 28, wherein the step of determining whether the battery is defective includes:
a step of extracting adjacent pixel values as an object among pixel values of a first value included in the binarized image; and
a step of determining whether the battery is defective based on one or more selected from the group consisting of shape and size of the object.

30. The X-ray inspection method according to claim 29, wherein in the step of determining whether the battery is defective, the battery is determined to be defective when the size of the object is larger than a reference size.

31. The X-ray inspection method according to claim 29, wherein in the step of determining whether the battery is defective, the battery is determined to be defective when the shape of the object is a reference shape.

32. The X-ray inspection method according to claim 26, further comprising:
a step of storing a first reference value corresponding to a first area representing an area in which a cathode layer, an anode layer, and a separator are stacked together, and a second reference value corresponding to a second area representing an area in which an anode layer and a separator are stacked together;
wherein the selected area is one area of the first area and the second area.

33. The X-ray inspection method according to claim 32, wherein the first reference value is a predetermined value based on the number of the cathode layers, the number of the anode layers, and the number of separators, and the second reference value is a predetermined value based on the number of the anode layers and the number of the separators.

34. The X-ray inspection method according to claim 26, wherein the step of acquiring an X-ray image includes:
a step of acquiring a plurality of X-ray images based on X-rays irradiated a plurality of times; and
a step of merging the plurality of X-ray images.

35. The X-ray inspection method according to claim 34, wherein the X-rays irradiated a plurality of times have different outputs.

36. An X-ray inspection method comprising:
a step of irradiating X-rays to a battery;
a step of acquiring a plurality of gray values based on transmitted X-rays from the b attery;
a step of acquiring an X-ray image including the plurality of gray values; and
a step of determining whether the battery is defective by comparing an average value of the gray values included in the selected area of the X-ray image with a reference value corresponding to the selected area.

37. The X-ray inspection method according to claim 36, further comprising:
a step of storing a first reference value corresponding to a first area representing an area in which a cathode layer, an anode layer, and a separator are stacked together, and a second reference value corresponding to a second area representing an area in which an anode layer and a separator are stacked together;
wherein in the step of determining whether the battery is defective, one area of the first area and the second area is determined as the selected area, and the battery is determined to be defective when the average value is greater or smaller than the reference value corresponding to the area among the first reference value and the second reference value.

38. The X-ray inspection method according to claim 36, wherein in the step of determining whether the battery is defective, the battery is determined to be defective when the average value is greater than an upper error limit of the reference value corresponding to the selected area, or the average value is smaller than a lower error limit of the reference value corresponding to the selected area.

39. The X-ray inspection method according to claim 38, wherein the reference value is a gray value corresponding to a normal battery.

40. The X-ray inspection method according to claim 39, wherein the gray value corresponding to a normal battery is a sum of gray values corresponding to two or more selected from the group consisting of at least one cathode layer, at least one anode layer, at least one separator, and at least one exterior material layer included in the normal battery.
